(19) Europäisches Patentamt
European Patent Office
Office européen des brevets

(11) EP 0 614 918 B1

(12) **EUROPEAN PATENT SPECIFICATION**

(45) Date of publication and mention of the grant of the patent: **21.10.1998 Bulletin 1998/43**

(51) Int Cl.[6]: **C08F 220/36**

(21) Application number: **93303567.7**

(22) Date of filing: **07.05.1993**

# (54) Polymerizable compositions and in-mold cured products using same

Polymerisierbare Zusammensetzungen und ihre Verwendung zur Herstellung von in der Form ausgehärteten Produkten

Compositions polymérisables et produits réticulés moulés les utilisant

(84) Designated Contracting States:
**DE FR GB IT**

(30) Priority: **09.03.1993 JP 76232/93**

(43) Date of publication of application:
**14.09.1994 Bulletin 1994/37**

(73) Proprietor: **Takemoto Yushi Kabushiki Kaisha**
**Gamagouri-shi Aichi-ken (JP)**

(72) Inventors:
- **Takayama, Yuji**
  **Kamakura-shi, Kanagawa-ken (JP)**
- **Matsueda, Hirokazu**
  **Tahara-cho, Atsumi-gun, Aichi-ken (JP)**
- **Sugiura, Masato**
  **Gamagouri-shi, Aichi-ken (JP)**
- **Ozaki, Tatsuhiko**
  **Nishio-shi, Aichi-ken (JP)**
- **Wada, Hirotaka**
  **Gamagouri-shi, Aichi-ken (JP)**
- **Suzuki, Toshiharu**
  **Toyohashi-shi, Aichi-ken (JP)**

(74) Representative: **Ablewhite, Alan James et al**
**MARKS & CLERK,**
**57/60 Lincoln's Inn Fields**
**London WC2A 3LS (GB)**

(56) References cited:
**US-A- 3 954 584**
**US-A- 4 043 982**
**US-A- 4 078 015**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### Background of the Invention

This invention relates to polymerizable compositions and in-mold cured products obtained from such compositions (hereinafter referred to simply as "molded products").

Polymerizable compositions containing polymerizable liquid resins are used widely. For example, molded products of polymerizable compositions containing an unsaturated polyester resin, which is a representative example of a polymerizable liquid resin, are being used as external panels and accessories of automobiles. There are a number of molding methods available for obtaining molded products of polymerizable compositions including, compression molding, which uses sheet molding compound (SMC); injection molding, which uses bulk molding compound (BMC); the hand lay-up method, whereby polymerizable compositions impregnate a reinforcing fiber mat, textile or strands, and are hardened; the pultrusion method; and the resin transfer molding (RTM) and reaction injection molding (RIM) methods, whereby a polymerizable composition is introduced into a mold for quick in-mold curing.

Examples of prior art polymerizable compositions containing unsaturated urethane are, Japanese Patent Publication Tokkai 57-182312, US-A-4043982, US-A-3954584 andJapanese Patent Publication Tokkai 61-225210. These publications have disclosed compositions containing polymerizable liquid resins comprising an unsaturated urethane and an alkyl (meth)acrylate obtained from polyisocyanate and hydroxyl alkyl (meth)acrylate.

The aforementioned prior art polymerizable compositions, however, have the following disadvantages because of their use of unsaturated urethanes obtained from polyisocyanates and hydroxy alkyl (meth)acrylates:

(1) Since the unsaturated urethane thus obtained contains many urethane bonds within its molecule (like most other kinds of polyurethane liquid resins), it has inferior water resistance properties, as compared to other thermosetting polymerizable compositions. This limits the use of the molded products obtained by in-mold curing; and

(2) Since the density of cross-linkage is high in molded products obtained by in-mold curing, shrinkage during hardening is large, in comparison to unsaturated polyester liquid resins. As a result, the generation of cracks and appearance of fiber patterns are prominently observed. Low shrinkage agents may be used for preventing such phenomena but they are not very effective.

### Summary of the Invention

The basic object of the present invention is to eliminate the disadvantages (1) and (2) given above, relating to prior art polymerizable compositions containing unsaturated urethane.

In view of the above and other objects, the present inventors have conducted research on polymerizable compositions comprising an unsaturated urethane, a vinyl monomer which can be copolymerized therewith, and inorganic fillers in a powder form. As a result of research on the relationship between the chemical structure of such unsaturated urethanes and the characteristics of molded products which are obtained, it has been discovered that it is preferable to use, at a specified ratio, an unsaturated urethane having introduced thereinto specified amounts of radical polymerizable groups comprising (meth)acryloyl groups and hydrophobic groups including higher hydrocarbon residual groups.

### Detailed Description of the Invention

This invention relates to polymerizable compositions comprising an unsaturated urethane shown by Formula (1) given below, a vinyl monomer copolymerizable with said unsaturated urethane and an inorganic powder filler, said unsaturated urethane and said vinyl monomer being contained at weight ratio 10/90 - 90/10, said inorganic powder filler being contained at a rate of 30-300 weight parts per 100 weight parts of the sum of said unsaturated urethane and said vinyl monomer:

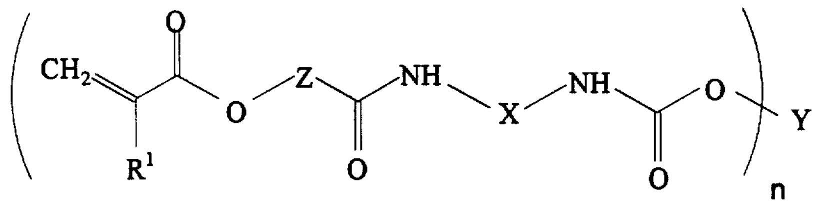

Formula (1)

where

$R^1$ is a hydrogen atom or a methyl group; X is a residual group obtained by removing the isocyanate groups from a diisocyanate;

Y is a residual group obtained by removing the hydroxyl groups from a non-radical polymerizable di-ol or tri-ol, selected from the group consisting of: ester di-ols and ester tri-ols which are partial esters derivable from an alkane monocarboxylic acid or an alkene monocarboxylic acid with 5-22 carbon atoms and a trihydric or a tetrahydric poly-ols;

ether di-ols and ether tri-ols which are partially etherified with an alkyl group or an alkenyl group with 5-22 carbon atoms;

alkane di-ols with 5-22 carbon atoms or polyoxyalkylene alkane di-ols obtainable by addition of alkylene oxide with 2-4 carbon atoms to said alkane di-ols;

ester di-ols and ester tri-ols which are partial or complete esters obtainable from a hydroxyalkane monocarboxylic acid or a hydroxyalkene monocarboxylic acid with 5-22 carbon atoms and a dihydric or a trihydric alcohol;

esters obtainable from 1 mole of a α,β-unsaturated dicarboxylic acid substituted by an alkyl group with 5-22 carbon atoms and 2 moles of a (poly)alkylene glycol with alkylene groups containing 2-4 carbon atoms;

Z is an organic group in the form of $(R^2O)_m$ or $R^3O$, $R^2$ being an alkylene group with 2-4 carbon atoms, $R^3$ being an alkylene group with 2-12 carbon atoms, and m being an integer 2-10; and n is 2 or 3.

The unsaturated urethane shown by Formula (1) for polymerizable compositions of the present invention is a urethane compound obtained by reacting an unsaturated urethane monoisocyanate (A) (obtained by reacting a (meth) acryl ester mono-ol to be described below and a diisocyanate at molar ratio of 1/1) and a non-radical polymerizable di-ol or tri-ol having an alkyl group or alkenyl group with 5-22 carbon atoms (hereinafter referred to simply as non-radical polymerizable diol or tri-ol) (B).

Aforementioned (meth)acryl ester mono-ols to be used for the synthesis of the unsaturated urethane monoisocyanate (A) include monoesters having one free hydroxyl group and are derivable from (meth)acrylic acid, and polyalkylene glycols having alkylene groups with 2-4 carbon atoms, as well as monoesters having one free hydroxyl group and derivable from (meth)acrylic acid, and alkane di-ols with 2-12 carbon atoms.

Examples of such (meth)acryl ester mono-ols include (1) mono(meth)acrylates of alkane di-ols such as 2-hydroxyethyl acrylate, 2-hydroxyethyl methacrylate, 2-hydroxypropyl methacrylate, 4-hydroxybutyl methacrylate, 6-hydroxyhexyl methacrylate and 12-hydroxydodecyl acrylate; and (2) mono(meth)acrylates of polyalkylene glycols such as diethylene glycol monomethacrylate, triethylene glycol monoacrylate, polyethylene glycol monomethacrylate, polypropylene glycol monomethacrylate, and poly-1,4-butylene glycol monoacrylate. Among the polyalkylene glycols to be used for deriving these (meth)acryl ester mono-ols, those with molecular weight 200 or less can be used, but those with molecular weight 80 or less are even more preferred.

Examples of diisocyanates to be used for the synthesis of the unsaturated urethane monoisocyanate (A) include: (1) aromatic diisocyanates such as tolylene diisocyanate, diphenylmethane diisocyanate, diphenylether-4,4'-diisocyanate, and toluidine diisocyanate; (2) aralkyl diisocyanates such as xylylene diisocyanate; and (3) aliphatic diisocyanates such as hexamethylene diisocyanate and trimethyl hexamethylene diisocyanate.

Examples of unsaturated urethane monoisocyanates (A), obtainable by reacting a (meth)acryl ester mono-ol, as described above, with a diisocyanate include, the reaction product of hydroxyethyl (meth)acrylate and tolylene diisocyanate at molar ratio of 1/1; the reaction product of hydroxypropyl (meth)acrylate and hexamethylene diisocyanate at molar ratio of 1/1; the reaction product of diethylene glycol mono(meth)acrylate and tolylene diisocyanate at molar ratio of 1/1; the reaction product of polypropylene glycol mono(meth)acrylate and diphenylmethane diisocyanate at molar ratio of 1/1; and the reaction product of 4-hydroxybutyl (meth)acrylate and xylylene diisocyanate at molar ratio of 1/1.

Examples of non-radical polymerizable di-ols or tri-ols (B) to be reacted with an unsaturated urethane monoisocyanate (A) include (a) ester di-ols and ester tri-ols which are partial esters derivable from alkane monocarboxylic acid or alkene monocarboxylic acid and trihydric or tetrahydric poly-ols; (b) ether di-ols and ether tr-iols which are partially etherified with an alkyl group or an alkenyl group ;
(c) alkane di-ols with 6-22 carbon atoms or polyoxyalkylene alkane di-ols, obtainable by addition of an alkylene oxide with 2-4 carbon atoms to such an alkane di-ol; (d) ester di-ols and ester tri-ols which are partial or complete esters obtainable from a hydroxyalkane monocarboxylic acid or ahydroxyalkene monocarboxylic acid and dihydric or trihydric alcohol; and (e)esters obtainable from 1 mole of $\alpha$, $\beta$-saturated dicarboxylic acid substituted by an alkyl group and 2 moles of a (poly)alkylene glycol with alkylene groups containing 2-4 carbon atoms.

Examples of ester di-ols in (a) above include, (1) mono-esters of trihydric poly-ols obtainable from 1 mole of a trihydric polyol and 1 mole of a monocarboxylic acid such as glycerine monoisooctanoate, glycerine monooleate, trimethylol propane monooctanoate, trimethylol ethane monoisonanoate, and (poly)ethoxylated glycerine monooctanoate; and (2) di-esters of tetrahydric poly-ols obtainable from 1 mole of a tetrahydricpoly-ol and 2 moles of a monocarboxylic acid, such as pentaerythritol dihexanoate and pentaerythritol monooctanoate monodecanoate. Examples of ester tri-ols in (a) above include mono-esters of tetra-ols obtainable from 1 mole of a tetra-ol and 1 mole of a monocarboxylic acid, such as pentaerythritol monooleate and diglycerine monooctanoate.

Examples of ether di-ols in (b) above include (1) monoalkyl glycerylethers or monoalkenyl glycerylethers obtainable from 1 mole of an aliphatic alcohol and 1 mole of a glycidol, such as monooctyl glycerylether, monoisotridecyl glycerylether and monooleyl glycerylether; and (2) di-ol-di-(1-alkoxy-2hydroxypropyl)ethers and di-ol-di-(1-alkenoxy-2hydroxypropyl)ethers obtainable from 1 mole of a diglycidylether of di-ol and 2 moles of an aliphatic alcohol such as ethylene glycol-di-(1-lauroxy-2-hydroxypropyl)ether and dipropylene glycol-di-(1-oleoxy-2-hydroxypropyl)ether. Examples of ether tri-ols in (b) above include, (1) monoalkyl diglycerylethers and monoalkenyl diglycerylethers obtainable from 1 mole of an aliphatic alcohol and 2 moles of a glycidol, such as monolauryl diglycerylether and monooleyl diglycerylether; (2) tri-ol-di(1-alkoxy-2-hydroxypropyl)ethers and tri-ol-di-(1-alkenoxy-2hydroxypropyl)ethers obtainable from 1 mole of a diglycidylether of tri-ol and 2 moles of an aliphatic alcohol such as, glycerine-di-(l-octoxy-2-hydroxypropyl)ether and trimethylol propane-di- (1-oleoxy-2-hydroxypropyl) ether; and (3) tri-ol-tri-(1-alkoxy2-hydroxypropyl) ethers and tri-ol-tri-(1-alkenoxy-2hydroxypropyl)ethers obtainable from 1 mole of a triglycidylether of tri-ol and 3 moles of an aliphatic alcohol, such as trimethylol propane-tri-(1-isotridecanoxy-2-hydroxypropyl)ether and glycerine-tri-(1-oleoxy-2hydroxypropyl)ether.

Examples of alkane di-ols in (c) above include 1,2-dihydroxydecane, 1,2-dihydroxydodecane and 1,2-dihydroxy octadecane. Examples of polyoxyalkylene alkane diols in (c) , above include, 1,2-di-(2-hydroxyethoxy)-decane and 1,2-di-(2-hydroxypropyloxy)-dodecane.

Examples of ester di-ols in (d) above include, ethylene glycolmono-(12-hydroxy octadecanoate) and 1,4-butylene glycol-di- (12-hydroxy-9-octadecenoate). Examples of ester tri-ols in (d)above include glycerine-mono-(12-hydroxy octadecanoate) and trimethylol propane-tri-(2-hydroxy tetradecanoate).

Examples of esters in (e) above include, pentadecyl succinic acid-di-(2-hydroxyethyl ester) and octadecyl succinic acid-di-(2-hydroxypropyl ester).

Unsaturated urethanes shown by Formula (1) are reaction products of unsaturated urethane monoisocyanates (A) and non-radical polymerizable di-ols (B) at a molar ratio of 2/1 or reaction products of unsaturated urethane monoisocyanates (A) and non-radical polymerizable tri-ols (B) at a molar ratio of 3/1. It is preferred that the reaction ratios between the unsaturated urethane monoisocyanates (A) and the non-radical polymerizable di-ols or tri-ols (B) be in a 1/1 molar ratio of functional groups (NCO/OH), but no particular ill-effects are encountered if the ratio is varied within the range of 1/0.95-0.95/1.

Unsaturated urethanes shown by Formula (1) may be synthesized by adding an inactive solvent to a (meth)acryl ester mono-ol, further adding a catalyst such as tertiary amine, metallic salts or preferably di-n-butyl tin dilaurate, as well known for the synthesis of polyurethanes, gradually adding diisocyanate while temperature is maintained at 30°C to synthesize an unsaturated urethane monoisocyanates (A), and further adding a non-radical polymerizable di-ol or a non-radical polymerizable tri-ol (B). In this situation, it is preferable to use as the inactive solvent a vinyl monomer such as alkyl (meth)acrylate or styrene which are reaction dilutants because the step of removing the inactive solvent after the reaction will then be dispensed with.

There is no particular limitation as to the kind of vinyl monomer to be used as reaction dilutant for unsaturated urethanes, in connection with polymerizable compositions of the present invention, as long as they are copolymerizable with the unsaturated urethane. Examples of such vinyl monomer include (1) alkyl (meth)acrylates such as methyl methacrylate, methyl acrylate, ethyl methacrylate and ethyl acrylate, (2) vinyl aromatic hydrocarbons such as styrene, methyl styrene and divinyl benzene, and (3) diallyl phthalate. They may be used singly or as a mixture of two or more. From the point of view of the properties of the molded products to be obtained, however, methyl methacrylate, styrene and their mixtures are preferable.

In the polymerizable compositions according to the present invention, preferable weight ratio between the unsaturated urethane and the vinyl monomer which is copolymerizable therewith (unsaturated urethane)/(vinyl monomer) is 10/90-90/10 and, more preferably, 40/60-75/25. If this ratio is smaller than 10/90, the curing speed is too low and the physical properties of the molded products obtained therefrom are poor. If it exceeds 90/10, on the other hand, viscosity becomes too high and the in-mold curing process becomes difficult.

The unsaturated urethane contained in polymerizable compositions according to the present invention has within its molecule at least two radical polymerizable double bonds and at least one higher aliphatic hydrocarbon group. The number of such double bonds contained in a molecule and the molecular weight of the unsaturated urethane per double bond affect the speed of its curing speed. In order to obtain a practically convenient curing reaction speed, the unsaturated urethane should be such that its molecular weight per such double bond be 700 or less and, more preferably, in the range of 350-650.

The polymerizable compositions according to the present invention are composed not only of aforementioned unsaturated urethanes and vinyl monomers which are copolymerizable therewith (this mixture being hereinafter referred to simply as "liquid resin"), but also of an inorganic powder filler. The content of the inorganic powder filler is 30-300 weight parts to 100 weight parts of the liquid resin. The amount of such inorganic powder filler to be contained varies according to its kind, particle size, the molding method of the polymerizable composition and the desired properties of the molded products to be obtained. In general, however, the preferred ratio is 100-300 weight parts to 100 weight parts of the liquid resin.

Examples of such inorganic powder fillers include, alumina trihydrate ($Al_2O_3$•$3H_2O$), calcium carbonate, silica and calcium sulfate dihydrate ($CaSO_4$•$2H_2O$). If use is made of a material containing water of crystallisation, or alumina trihydrate in particular, flame-retarding property can be provided to the molded products obtained by in-mold curing.

The molded products, according to the present invention, are obtained by in-mold curing of polymerizable compositions' described above. Various problems associated with water resistance and shrinkage in hardening are reduced with the molded products according to the present invention.

In order to improve these physical properties of the molded products, higher aliphatic hydrocarbon groups with 5-22 carbon atoms are introduced according to the present invention into the molecules of unsaturated urethane. Preferable examples of such higher aliphatic hydrocarbon groups include alkyl groups and isoalkyl groups with 6-18 carbon atoms. Moreover, it is preferred that the ratio of the number of higher aliphatic hydrocarbon groups to be introduced with respect to that of (meth)acryl groups in the unsaturated urethane molecule be 1/3-1 and that its content be 10-40 weight %.

Various methods known for preparing polymerizable compositions containing unsaturated polyester resins can be used for the preparation of polymerizable compositions of the present invention. Similarly, various methods known for in-mold curing of polymerizable compositions containing unsaturated polyester resins can be used for the present invention. For example, curing agents and curing accelerators of many kinds can be used for radical polymerization.

Examples of curing agents include benzoyl peroxide, t-butylperoxy-2-ethyl hexanoate, t-butyl peroxy benzoate, 1,1-di-t-butyl peroxy-3,3,5-trimethyl cyclohexane, and bis(4-t-butyl cyclohexyl) peroxy dicarbonate. They may be used singly or as a mixture of two or more. Examples of curing accelerators include tertiary amines such as N,N-dimethyl-p-toluidine and N,N-dimethyl aniline.

The curing agent is normally used at the rate of 1.5 weight % with respect to the whole of the polymerizable composition of the invention. A mold releasing agent may also be used in the case of in-mold curing. Examples of such mold releasing agents include metallic soap of, say, zinc stearate, and Zelec UN (which is a trade name for phosphoric ester produced by E.I. duPont de Nemours and Co.).

The molded products according to the present invention can be easily obtained from polymerizable compositions of the invention by any of the in-mold curing methods such as, the pultrusion method, injection molding by the use of BMC, compression molding by using SMC, resin transfer molding, and reaction injection molding. At the time of in-mold curing, reinforcing fibers may be caused to be contained so as to add strength to the molded product. Methods of strengthening molded products include, initially setting reinforcing fibers inside the mold in the form of a mat, textile or strands, bringing a polymerizable composition and a curing agent thereinto, or initially impregnating reinforcing strands with a polymerizable composition with a curing agent added thereto and using them in in-mold curing. Examples of reinforcing fibers include glass fibers, carbon fibers and aramid fibers.

For the purpose of obtaining molded products with even more reduced shrinkage in hardening, it is preferred to increase the contents of the inorganic powder filler and the reinforcing fibers as much as possible. It is preferred that the content of the inorganic powder filler be 100-300 weight parts to 100 weight parts of liquid resins, and more preferably 150-300 weight parts such that the volume ratio of the reinforcing fibers inside the molded product is over 30 volume %, and more preferably 40-70 volume %. In order to obtain molded products with such high contents of an inorganic powder filler and reinforcing fibers, it is most advantageous to make use of a pultrusion method. A high level of flame retarding property can be provided to the molded products by pultrusion if alumina trihydrate is used as an inorganic powder filler and non-organic fibers such as glass fibers, carbon fibers or steel fibers are used as reinforcing fibers.

The present invention will be described next by way of examples such that its characteristics and effects can be more clearly understood, but the present invention is not intended to be limited by these examples. In what follows, weight parts will be simply referred to as parts, and weight % will be simply referred to as % except regarding glass content and oxygen index.

Tests and Results

Test Series 1

Synthesis of Unsaturated Urethane I-1 and Preparation of Liquid Resin i-1

To a reaction vessel was added methyl methacrylate (305 parts), diethylene glycol monomethacrylate (174 parts, 1.0 mole) and di-n-butyl tin dilaurate (1 part) and the mixture stirred while the temperature was kept at 50°C. Kolonate T-80 (trade name of Nippon Polyurethane Industry, Co., Ltd. for 2,4- and 2,6-mixed tolylene diisocyanate) (174 parts, 1.0 mole) was then added dropwise over a period of 30 minutes. Although heat was generated in the reaction at this time, the reaction temperature was kept at 60°C or below. After keeping the reaction for 1 hour at 60°C, the reaction was complete. After this time, a methyl methacrylate solution of unsaturated urethane monoisocyanate was obtained, which is a reaction product of diethylene glycol monomethacrylate and tolylene diisocyanate at molar ratio of 1/1. Glycerine monoisooctanoate (109 parts, 0.5 moles) was then added into this reaction product over a period of 30 minutes at 50°C. Although heat was generated in the reaction at this time, the reaction temperature was kept at 60°C or below. By keeping the reaction for 1 hour at 60°C, the synthesis was then complete and Liquid Resin I-1 was obtained, containing 60% of the Unsaturated Urethane I-1.

Synthesis of Unsaturated Urethane I-2 and Preparation of Liquid Resin i-2

To a reaction vessel was added, oleyl alcohol (268 parts, (1.0 mole) and boron trifluoride ether complex (1.5 parts) and then stirred while the temperature was held at 80°C. Propylene glycol diglycidyl ether (94 parts, 0.5 moles) was then added dropwise over a period of 30 minutes. During this addition, the reaction temperature was maintained at 80-90°C. The reaction was completed thereafter by keeping it for 1 hour at 100°C. Oxylan oxygen inside the reaction product was analysed but it had almost completely disappeared. What was obtained was propylene glycol-di-(1-oleoxy-2-hydroxypropyl)ether and it was used for the synthesis of the Unsaturated Urethane I-2, as described below.

Methyl methacrylate (447 parts), hydroxyethyl acrylate (116 parts, 1.0 mole), di-n-butyl tin dilaurate (1 part) and Kolonate T-80 (trade name of Nippon Polyurethane Industry, Co., Ltd. for 2,4- and 2,6-mixed tolylene diisocyanate) (174 parts, 1.0 mole) were used to obtain, as in the case of Unsaturated Urethane I-1 described above, a methyl methacrylate solution of unsaturated urethane monoisocyanate which is a reaction product of hydroxyethyl acrylate and tolylene diisocyanate at molar ratio of 1/1. Aforementioned propylene glycol-di-(1-oleoxy-2-hydroxypropyl)ether 380 parts (0.5 moles) was used therewith to obtain Liquid Resin i-2, containing 60% of the Unsaturated Urethane I-2, further as in the case of the Unsaturated Urethane I-1 described above.

Synthesis of Unsaturated Urethane I-3 and Preparation of Liquid Resin i-3

Octyl alcohol (260 parts, 2.0 moles), boron trifluoride ether complex (1.5 parts) and glycerine diglycidylether (203 parts, 1.0 5 mole) were used to obtain, as in the case of Unsaturated Urethane I-2 described above, glycerine-di-(1-octoxy-2-hydroxypropyl)ether. This was used for the synthesis of Unsaturated Urethane I-3 as described below.

Styrene (356 parts), hydroxyethyl methacrylate (130 parts, 1.0 mole), di-n-butyl tin dilaurate (1 part) and diphenylmethane diisocyanate (250 parts, 1.0 mole) were used to obtain, as in the case of Unsaturated Urethane I-1 described above, a styrene solution of unsaturated urethane monoisocyanate, which is a reaction product of hydroxyethyl methacrylate and diphenylmethane diisocyanate at molar ratio of 1/1. Aforementioned glycerine-di-(1-octoxy-2-hydroxypropyl)ether (154.7 parts, 0.33 moles) was used with it to obtain Liquid Resin i-3, containing 60% of the Unsaturated Urethane I-3, further as in the case of the Unsaturated Urethane I-1.

Synthesis of Unsaturated Urethane I-4 and Preparation of Liquid Resin i-4

Methyl methacrylate (266 parts), hydroxyethyl methacrylate (130 parts, 1,0 mole), di-n-butyl tin dilaurate (1 part) and hexamethylene diisocyanate (168 parts, 1.0 mole) were used to obtain, as in the case of Unsaturated Urethane I-1, a methyl methacrylate solution of unsaturated urethane monoisocyanate which is a reaction product of hydroxyethyl acrylate and hexamethylene diisocyanate at molar ratio of 1/1. To this was added 1,2-dihydroxy dodecane (101 parts, 0.5 moles) to obtain Liquid Resin i-4 containing 60% of the Unsaturated Urethane I-4, further as in the case of the

Unsaturated Urethane I-1.

Synthesis of Unsaturated Urethane I-5 and Preparation of Liquid Resin i-5

Methyl methacrylate (341 parts), 2-hydroxypropyl methacrylate (144 parts, 1.0 mole), di-n-butyl tin dilaurate (1 part) and hexamethylene diisocyanate (168 parts, 1.0 mole) were used to obtain, as in the case of Unsaturated Urethane I-1, a methyl methacrylate solution of unsaturated urethane monoisocyanate which is a reaction product of 2-hydroxypropyl acrylate and hexamethylene diisocyanate at molar ratio of 1/1. To this was added trimethylol propane monooleate (199 parts, 0.5 moles) to obtain Liquid Resin i-5, containing 60% of the Unsaturated Urethane I-5, further as in the case of the Unsaturated Urethane I-1.

Synthesis of Unsaturated Urethane I-6 and Preparation of Liquid Resin i-6

Lauryl alcohol (186 parts, 1.0 mole), boron trifluoride ether complex (1.0 part) and glycidol (78 parts, 1.05 moles) were used to obtain monolauryl glyceryl ether as in the case of the Unsaturated Urethane I-2. This was used in the synthesis of Unsaturated Urethane I-6 as shown below.

Styrene (317 parts), 4-hydroxybutyl methacrylate (158 parts, (1.0 mole), di-n-butyl tin dilaurate (1 part) and xylylene diisocyanate (188 parts, 1.0 mole) were used to obtain, as in the case of Unsaturated Urethane I-1, a styrene solution of unsaturated urethane monoisocyanate which is a reaction product of 4-hydroxybutyl methacrylate and xylylene diisocyanate at molar ratio of 1/1. To this was added aforementioned monolauryl glyceryl ether (130 parts, 0.5 moles) to obtain Liquid Resin i-6 containing 60% of the Unsaturated Urethane I-6, further as in the case of the Unsaturated Urethane 1-1.

Synthesis of Unsaturated Urethane I-7 and Preparation of Liquid Resin i-7

Methyl methacrylate (400 parts), hydroxyethyl acrylate (116 parts, 1.0 mole), di-n-butyl tin dilaurate (1 part) and Kolonate T-80 (trade name of Nippon Polyurethane Industry, Co., Ltd. for 2,4- and 2,6-mixed tolylene diisocyanate) (174 parts, 1.0 mole) were used to obtain, as in the case of the Unsaturated Urethane I-1, a methyl methacrylate solution of unsaturated urethane monoisocyanate, which is a reaction product of hydroxyethyl acrylate and tolylene diisocyanate at molar ratio of 1/1. To this was added glycerine-tri-(12-hydroxy-9-octadecenoate) (311 parts, 0.33 moles) to obtain Liquid Resin i-7 containing 60% of the Unsaturated Urethane I-7, further as in the case of the Unsaturated Urethane I-1.

Synthesis of Unsaturated Urethane I-8 and Preparation of Liquid Resin i-8

Methyl methacrylate (327 parts), hydroxyethyl methacrylate (130 parts, 1.0 mole), di-n-butyl tin dilaurate (1 part) and Kolonate T-80 (trade name of Nippon Polyurethane Industry, Co., Ltd. for 2,4- and 2,6-mixed tolylene diisocyanate) (174 parts, 1.0 mole) were used to obtain, as in the case of Unsaturated Urethane I-1, a methyl methacrylate solution of unsaturated urethane monoisocyanate, which is a reaction product of hydroxyethyl methacrylate and tolylene diisocyanate at molar ratio of 1/1. To this was used dodecyl succinic acid-di-(2 hydroxyethyl)ester (186 parts, 0.5 moles) to obtain Liquid Resin i-8, containing 60% of the Unsaturated Urethane I-8, further as in the case of Unsaturated Urethane I-1.

Synthesis of Unsaturated Urethane R-1 and Preparation of Liquid Resin r-1

2-hydroxyethyl methacrylate (91 parts, 0.7 moles), methyl methacrylate (120 parts), di-n-butyl tin dilaurate (1 part) and Millionate MR-100 (trade name of Nippon Polyurethane Industry, Co., Ltd. for polymethyl polyphenyl polyisocyanate with average number of NCO = 3.5) (89 parts, 0.2 mole) were used to obtain Liquid Resin r-1, containing 60% of the Unsaturated Urethane R-1 as in the case of the Unsaturated Urethane i-1.

Synthesis of Unsaturated Urethane R-2 and Preparation of Liquid Resin r-2

2-hydroxyethyl methacrylate (130 parts, 1.0 mole), styrene (145 parts), di-n-butyl tin dilaurate (1 part) and Kolonate T-80 (trade name of Nippon Polyurethane Industry, Co., Ltd. for 2,4- and 2,6-mixed tolylene diisocyanate) (87 parts, 0.5 moles) were used to obtain Liquid Resin r-2, containing 60% of the Unsaturated Urethane R-2 as in the case of the Unsaturated Urethane I-1.

Descriptions of unsaturated urethane samples thus obtained are given in Table 1.

Table 1

| Type of unsaturated urethane | Molecular weight (x) | Number of double bonds (y) | x/y | Weight % of higher alkyl groups |
|---|---|---|---|---|
| I-1 | 914 | 2 | 457 | 11 |
| I-2 | 1340 | 2 | 670 | 37 |
| I-3 | 1604 | 3 | 535 | 14 |
| I-4 | 798 | 2 | 399 | 18 |
| I-5 | 1022 | 2 | 511 | 23 |
| I-6 | 952 | 2 | 476 | 18 |
| I-7 | 1802 | 3 | 601 | 41 |
| I-8 | 928 | 2 | 491 | 17 |
| R-1 | 902 | 3.5 | 258 | 0 |
| R-2 | 434 | 2 | 217 | 0 |

Test Series 2

(Preparation of Polymerizable Composition, Production of Molded Products by Resin Transfer Molding (RTM), and Evaluation Thereof)

Test Examples 1-8 and Comparison Examples 1-4

The polymerizable compositions were prepared by adding alumina trihydrate to the liquid resins obtained in Test Series 1 at the rates shown in Table 2, and mixtures were produced by adding an additive comprising a hardening accelerator, a mold releasing agent and a low shrinkage agent as shown also in Table 2. On the other hand, a glass strand continuous mat (Unifilo U-750, trade name of Nippon Electric Glass Co., Ltd.) was set in a nickel metallized mold heated to 35°C such that the glass content would be 25% and the mold was tightened to 2.5 $kg/cm^2$. Thereafter, specified amounts of the aforementioned mixtures and radical initiator solutions were injected at the rates shown in Table 2 into the mold by using measuring pumps through a static mixer to form uniform mixtures. The injection was stopped at the point in time when the injected liquid began to flow out from a clearance opposite from the injection opening. The product was taken out of the mold 20 minutes after the injection was stopped.

For each molded product thus obtained, fiber patterns and occurrence of cracks were visually examined. The results are also shown in Table 2.

**Table 2**

| | Test Examples | | | | | | | | Comparison Examples | | | |
|---|---|---|---|---|---|---|---|---|---|---|---|---|
| | 1 | 2 | 3 | 4 | 5 | 6 | 7 | 8 | 1 | 2 | 3 | 4 |
| (Mixture) | | | | | | | | | | | | |
| (Polymerizable composition) | | | | | | | | | | | | |
| Liquid Resin | i-1 100 | i-2 100 | i-3 100 | i-4 100 | i-5 100 | i-6 100 | i-7 100 | i-8 100 | r-1 100 | r-2 100 | r-1 100 | r-2 100 |
| Alumina trihydrate | 100 | 100 | 100 | 100 | 100 | 100 | 100 | 100 | 100 | 100 | 100 | 100 |
| (Additives) | | | | | | | | | | | | |
| Curing accelerator | *4 | *4 | *4 | *4 | *4 | *4 | *4 | *4 | *4 | *4 | *4 | *4 |
| Mold releasing agent | 0.5 | 0.5 | 0.5 | 0.5 | 0.5 | 0.5 | 0.5 | 0.5 | 0.5 | 0.5 | 0.5 | 0.5 |
| Low shrinking agent | - | - | - | - | - | - | - | - | - | - | 40 | 40 |
| (Radical initiator) *5 | 2.0 | 2.0 | 2.0 | 2.0 | 2.0 | 2.0 | 2.0 | 2.0 | 2.0 | 2.0 | 2.0 | 2.0 |
| (Results) | | | | | | | | | | | | |
| Fiber patterns | No | No | No | No | No | No | No | No | Yes | Yes | Yes | Yes |
| Occurrence of cracks | No | No | No | No | No | No | No | No | Yes | Yes | Yes | Yes |

Notes:

Numbers in units of weight part;
Liquid resins: Type (upper line), weight part (lower line);
Mold releasing agent: Mold Wiz (produced by Kozakura Shokai Co., Ltd.)
Low shrinking agent for Comparison Example 3
40 parts of polyvinyl acetate (molecular weight = 200,000) dissolved in 60 parts of methyl methacrylate
Low shrinking agent for Comparison Example 4:
33.3 parts of polypropylene adipate (molecular weight = 5000) dissolved in 66.7 parts of styrene.
*4: 0.075
*5: 50% solution of dibenzoyl peroxide (Nypper BMT-M produced by Nippon Oil and Fats Co., Ltd.)
Spots of phase-separated portions of low shrinking agents were observed on the surfaces of molded products from Comparison Examples 3 and 4.

Test Series 3

(Preparation of Polymerizable Compositions, Production of Molded Products by Cast Molding, and Evaluation Thereof)

Test Examples 9-16 and Comparison Examples 5-8

The polymerizable compositions were prepared by adding alumina trihydrate to the liquid resins obtained in Test Series 1 at rates shown in Table 3, and the mixtures were produced by adding an additive comprising a curing accelerator, a mold releasing agent and a low shrinkage agent. On the other hand, a polyethylene tube of outer diameter 5mm, was sandwiched between two glass sheets (25cm x 25cm) of thickness 5mm, to form a mold with a clearance of 3mm. The aforementioned mixtures and radical initiator solutions were uniformly mixed together at the rates shown in Table 3 and poured into this mold. The mold was placed inside a thermostat of 35°C for one hour and then at 80°C for 12 hours to obtain molded products.

Test pieces of length 80mm, width 25mm and thickness 3mm were prepared by using a diamond cutter to cut these molded products. After these test pieces were accurately weighed, they were immersed in warm water of 80°C for 30 hours. After they were taken out, their external appearance was examined regarding whitening and occurrence of cracks. The weight of each test piece was compared before and after the testing to calculate the water absorbing capacity according to the formula given below. The flexural strength was also measured according to JIS-K6911 (Japanese Industrial Standards) to determine the lowering in flexural strength by the formula given below.

Water absorbing capacity (%) = {((Weight after testing) - (Weight before testing))/(Weight before testing)} x 100.

Lowering in flexural strength (%) = {((Strength before testing) - (Strength after testing))/(Strength before testing)} x 100.

These test results are also shown in Table 3, in which the 10 water absorbing capacity and the lowering in flexural strength are shown by an average of n = 3 measured values.

Table 3

| | Test Examples | | | | | | | | Comparison Examples | | | |
|---|---|---|---|---|---|---|---|---|---|---|---|---|
| | 9 | 10 | 11 | 12 | 13 | 14 | 15 | 16 | 5 | 6 | 7 | 8 |
| {Mixtures} | | | | | | | | | | | | |
| (Polymerizable composition) | | | | | | | | | | | | |
| Liquid Resin | i-1 100 | i-2 100 | i-3 100 | i-4 100 | i-5 100 | i-6 100 | i-7 100 | i-8 100 | r-1 100 | r-2 100 | r-1 100 | r-2 100 |
| Alumina trihydrate | 50 | 50 | 50 | 50 | 50 | 50 | 50 | 50 | 50 | 50 | 50 | 50 |
| (Additives) | | | | | | | | | | | | |
| Curing accelerator | *4 | *4 | *4 | *4 | *4 | *4 | *4 | *4 | *4 | *4 | *4 | *4 |
| Mold releasing agent | 0.5 | 0.5 | 0.5 | 0.5 | 0.5 | 0.5 | 0.5 | 0.5 | 0.5 | 0.5 | 0.5 | 0.5 |
| Low shrinking agent | - | - | - | - | - | - | - | - | - | - | 40 | 40 |
| (Radical initiator) | | | | | | | | | | | | |
| *5 | 2.0 | 2.0 | 2.0 | 2,0 | 2.0 | 2.0 | 2,0 | 2.0 | 2.0 | 2.0 | 2.0 | 2.0 |
| {Results} | | | | | | | | | | | | |
| Whitening or cracks | No | No | No | No | No | No | No | No | Yes | Yes | Yes | Yes |
| Water absorbing capacity (%) | 1.2 | 0.4 | 0.9 | 0.7 | 0.5 | 0.6 | 0.4 | 0.7 | 3.0 | 2.7 | 3.7 | 3.6 |
| Lowering in flexural strength (%) | 22.2 | 10.9 | 20.4 | 16.9 | 12.5 | 15.1 | 10.5 | 17.2 | 38.5 | 35.4 | 41.0 | 40.1 |
| Notes: See Notes to Table 2 regarding liquid resins, curing accelerator, mold releasing agent, *4 and *5. | | | | | | | | | | | | |

(Preparation of Polymerizable Compositions, Production of Molded Products by Pultrusion, and Evaluation Thereof)

Test Examples 17-22 and Comparison Examples 9-12 The polymerizable compositions were prepared by using the liquid resins obtained in Test Series 1 as shown in Table 4 and mixtures were produced by adding an additive comprising a radical initiator and a mold releasing agent as shown in Table 4. After these mixtures were soaked in glass robing as shown in Table 4, they were passed through a flat mold of dimensions 25mm x 3mm x 400mm for pultrusion molding at the speed of 20cm/minute to obtain in-mold cured products with width 25mm and thickness 3mm in a continuous planar form.

For each molded product thus obtained, fiber patterns and occurrence of warping were visually examined. Additionally, test pieces of length 100mm, width 6.5mm and thickness 3mm were prepared by using a diamond cutter to cut these molded products. The oxygen index method of testing flammability of polymeric materials according to JIS-K7201 (Japanese Industrial Standards) was carried out on these test pieces. The results of these tests are shown in Table 4.

As is clear from the above, the present invention can provide molded products with improved appearance and water-resistance and small mold shrinkage.

**Table 4**

| | Test Examples | | | | | | Comparison Examples | | | |
|---|---|---|---|---|---|---|---|---|---|---|
| | 17 | 18 | 19 | 20 | 21 | 22 | 9 | 10 | 11 | 12 |
| (Mixture) | | | | | | | | | | |
| (Polymerizable composition) | | | | | | | | | | |
| Liquid Resin | i-1 100 | i-1 100 | i-4 100 | i-4 100 | i-6 100 | i-8 100 | i-1 100 | r-1 100 | r-1 100 | r-2 100 |
| Alumina trihydrate (Additives) | 100 | 200 | 150 | 300 | 200 | 200 | 0 | 100 | 200 | 150 |
| Radical initiator | | | | | | | | | | |
| *6 | 1 | 1 | 1 | 1 | 1 | 1 | 1 | 1 | 1 | 1 |
| *7 | 1 | 1 | 1 | 1 | 1 | 1 | 1 | 1 | 1 | 1 |
| Mold releasing agent | 1 | 1 | 1 | 1 | 1 | 1 | 1 | 1 | 1 | 1 |
| (Glass robing) | | | | | | | | | | |
| Number of pieces | 30 | 30 | 20 | 20 | 25 | 25 | 30 | 30 | 25 | 25 |
| Content (volume %) | 60 | 60 | 40 | 40 | 50 | 50 | 60 | 60 | 50 | 50 |
| (Results) | | | | | | | | | | |
| Fiber patterns | No | No | No | No | No | No | Yes | Yes | Yes | Yes |
| Warping | No | No | No | No | No | No | Yes | Yes | Yes | Yes |
| Oxygen index | 70< | 70< | 70< | 70< | 70< | 70< | 30> | 70< | 70< | 70< |

Notes:

See Notes to Table 2 regarding liquid resins and mold releasing agent;
*6: Peroil TCP (trade name of Nippon Oil and Fats Co., Ltd. for bis(4-t-butyl cyclohexyl)peroxy dicarbonate);
*7 Percure HI (trade name of Nippon Oil and Fats Co., Ltd. for t-butyl peroxy benzoate),
Glass robing: ER4400F-183 (trade name of Nippon Electric Glass Co., Ltd);
Glass robing content: Volume % inside in-mold cured product.

## Claims

1. A polymerizable composition comprising an unsaturated urethane shown by Formula (1) given below, a vinyl monomer copolymerizable with said unsaturated urethane, and an inorganic powder filler, said unsaturated urethane and said vinyl monomer being contained at weight ratio 10/90 - 90/10, said inorganic powder filler being contained at a rate of 30-300 weight parts per 100 weight parts of the sum of said unsaturated urethane and said vinyl monomer:

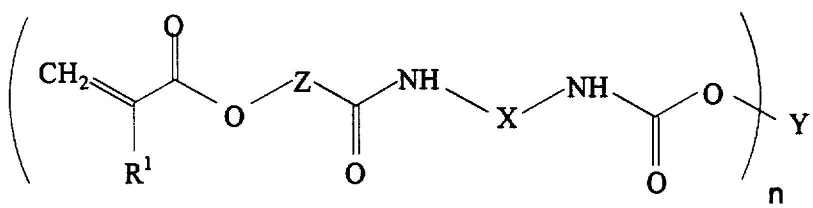

Formula (1)

where

$R^1$ is a hydrogen atom or a methyl group; X is a residual group obtained by removing the isocyanate groups from a diisocyanate;
Y is a residual group obtained by removing the hydroxyl groups from a non-radical polymerizable di-ols or tri-ols, selected from the group consisting of: ester di-ols and ester tri-ols which are partial esters derivable from an alkane monocarboxylic acid or an alkene monocarboxylic acid with 5-22 carbon atoms and a trihydric or a tetrahydric poly-ols;
ether di-ols and ether tri-ols which are partially etherified with an alkyl group or an alkenyl group with 5-22 carbon atoms;
alkane di-ols with 5-22 carbon atoms or polyoxyalkylene alkane di-ols obtainable by addition of alkylene oxide with 2-4 carbon atoms to said alkane di-ols;
ester di-ols and ester tri-ols which are partial or complete esters obtainable from a hydroxyalkane monocarboxylic acid or a hydroxyalkene monocarboxylic acid with 5-22 carbon atoms and a dihydric or a trihydric alcohol;
esters obtainable from 1 mole of a $\alpha,\beta$-unsaturated dicarboxylic acid substituted by an alkyl group with 5-22 carbon atoms and 2 moles of a (poly)alkylene glycol with alkylene groups containing 2-4 carbon atoms;
Z is an organic group in the form of $(R^2O)_m$ or $R^3O$, $R^2$ being an alkylene group with 2-4 carbon atoms, $R^3$ being an alkylene group with 2-12 carbon atoms, and m being an integer 2-10; and n is 2 or 3.

2. A polymerizable composition as claimed in claim 1 containing 100-300 weight parts of said inorganic powder filler

for 100 weight parts of the sum of said unsaturated urethane and said vinyl monomer.

**3.** A polymerizable composition as claimed in claim 2 wherein said inorganic powder filler comprises alumina trihydrate.

**4.** An in-mold cured product using the polymerizable composition as claimed in claim 1.

**5.** An in-mold cured product using the polymerizable composition as claimed in claim 2.

**6.** An in-mold cured product using the polymerizable composition as claimed in claim 3.

**7.** The in-mold cured product as claimed in claim 4 which is reinforced with reinforcing fibers.

**8.** The in-mold cured product as claimed in claim 5 which is reinforced with reinforcing fibers.

**9.** The in-mold cured product as claimed in claim 6 which is reinforced with reinforcing fibers.

**10.** The in-mold cured product as claimed in claim 7 containing more than 30% by volume of said reinforcing fibers.

**11.** The in-mold cured product as claimed in claim 8 containing more than 30 by volume of said reinforcing fibers.

**12.** The in-mold cured product as claimed in claim 3 containing more than 30% by volume of said reinforcing fibers.

**13.** The in-mold cured product as claimed in claim 7 produced by pultrusion.

**14.** The in-mold cured product as claimed in claim 8 produced by pultrusion.

**15.** The in-mold cured product as claimed in claim 9 produced by pultrusion.

**16.** The in-mold cured product as claimed in claim 10 produced by pultrusion.

**17.** The in-mold cured product as claimed in claim 11 produced by pultrusion.

**18.** The in-mold cured product as claimed in claim 12 produced by pultrusion.

**Patentansprüche**

**1.** Polymerisierbare Zusammensetzung, umfassend ein in Formel (I) gezeigtes ungesättigtes Urethan, ein mit dem ungesättigten Urethan copolymerisierbares Vinylmonomer und ein anorganisches Füllstoffpulver, wobei das ungesättigte Urethan und das Vinylmonomer in einem Gewichtsverhältnis von 10:90 bis 90:10 enthalten sind und das anorganische Füllstoffpulver mit einem Anteil von 30 bis 300 Gewichtsteilen bezogen auf 100 Gewichtsteile der Summe des ungesättigten Urethans und des Vinylmonomers enthalten ist:

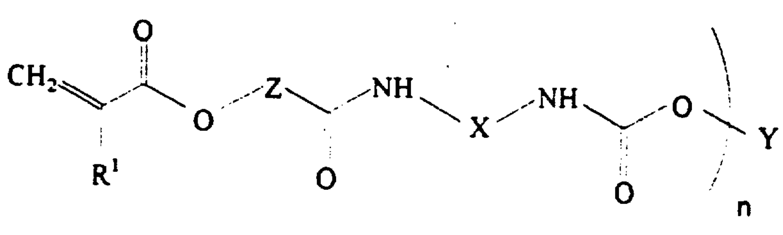

Formel (I)

worin

$R^1$ ein Wasserstoffatom oder eine Methyl-Gruppe ist; X ist eine Rest-Gruppe, die erhalten wird, indem die

Isocyanat-Gruppen von einem Diisocyanat entfernt werden;
Y ist eine Rest-Gruppe, die erhalten wird, indem die Hydroxyl-Gruppen von nichtradikalisch polymerisierbaren Diolen oder Triolen entfernt werden, ausgewählt aus: Esterdiolen und Estertriolen, die Teilester sind, derivierbar von einer Alkanmonocarbonsäure oder einer Alkenmonocarbonsäure mit 5 bis 22 Kohlenstoffatomen und dreiwertigen oder vierwertigen Polyolen;
Etherdiole und Ethertriole, die partiell etherisiert sind mit einer Alkyl-Gruppe oder einer Alkenyl-Gruppe mit 5 bis 22 Kohlenstoffatomen;
Alkandiole mit 5 bis 22 Kohlenstoffatomen oder Polyoxyalkylenalkandiole, die durch Addition von Alkylenoxid mit 2 bis 4 Kohlenstoffatomen an die Alkandiole erhalten werden können;
Esterdiole und Estertriole, die Teilester oder Vollester sind, die von einer Hydroxyalkanmonocarbonsäure oder einer Hydroxyalkenmonocarbonsäure mit 5 bis 22 Kohlenstoffatomen und einem zweiwertigen oder dreiwertigen Alkohol erhalten werden können;
Ester, die erhalten werden können von 1 Mol einer $\alpha,\beta$-ungesättigten Dicarbonsäure, die mit einer Alkyl-Gruppe mit 5 bis 22 Kohlenstoffatomen substituiert ist, und 2 Molen eines (Poly)alkylenglykols mit Alkylen-Gruppen, die 2 bis 4 Kohlenstoffatome enthalten;
Z ist eine organische Gruppe in der Form $(R^2O)_m$ oder $R^3O$, wobei $R^2$ eine Alkylen-Gruppe mit 2 bis 4 Kohlenstoffatomen ist, $R^3$ ist eine Alkylen-Gruppe mit 2 bis 12 Kohlenstoffatomen, und m ist eine ganze Zahl von 2 bis 10 und n 2 oder 3.

**2.** Polymerisierbare Zusammensetzung nach Anspruch 1, enthaltend 100 bis 300 Gewichtsteile des anorganischen Füllstoffpulvers bezogen auf 100 Gewichtsteile der Summe des ungesättigten Urethans und des Vinylmonomers.

**3.** Polymerisierbare Zusammensetzung nach Anspruch 2, bei welcher das anorganische Füllstoffpulver Aluminiumhydroxid umfaßt.

**4.** Erzeugnis, in der Form gehärtet, bei welchem die polymerisierbare Zusammensetzung nach Anspruch 1 verwendet wird.

**5.** Erzeugnis, in der Form gehärtet, bei welchem die polymerisierbare Zusammensetzung nach Anspruch 2 verwendet wird.

**6.** Erzeugnis, in der Form gehärtet, bei welchem die polymerisierbare Zusammensetzung nach Anspruch 3 verwendet wird.

**7.** Erzeugnis nach Anspruch 4, in der Form gehärtet, das mit verstärkenden Fasern verstärkt ist.

**8.** Erzeugnis nach Anspruch 5, in der Form gehärtet, das mit verstärkenden Fasern verstärkt ist.

**9.** Erzeugnis nach Anspruch 6, in der Form gehärtet, das mit verstärkenden Fasern verstärkt ist.

**10.** Erzeugnis nach Anspruch 7, in der Form gehärtet, enthaltend mehr als 30 Vol.% der verstärkenden Fasern.

**11.** Erzeugnis nach Anspruch 8, in der Form gehärtet, enthaltend mehr als 30 Vol.% der verstärkenden Fasern.

**12.** Erzeugnis nach Anspruch 9, in der Form gehärtet, enthaltend mehr als 30 Vol.% der verstärkenden Fasern.

**13.** Erzeugnis nach Anspruch 7, in der Form gehärtet, hergestellt durch Pultrusion.

**14.** Erzeugnis nach Anspruch 8, in der Form gehärtet, hergestellt durch Pultrusion.

**15.** Erzeugnis nach Anspruch 9, in der Form gehärtet, hergestellt durch Pultrusion.

**16.** Erzeugnis nach Anspruch 10, in der Form gehärtet, hergestellt durch Pultrusion.

**17.** Erzeugnis nach Anspruch 11, in der Form gehärtet, hergestellt durch Pultrusion.

**18.** Erzeugnis nach Anspruch 12, in der Form gehärtet, hergestellt durch Pultrusion.

**Revendications**

1. Composition polymérisable comprenant un uréthane insaturé représenté par la formule (1) ci-après, un monomère vinylique copolymérisable avec ledit uréthane insaturé, et une charge de poudre inorganique, ledit uréthane insaturé et ledit monomère vinylique étant contenus à un rapport pondéral de 10/90 à 90/10, ladite charge de poudre inorganique étant contenue en une proportion de 30 à 300 parties en poids pour 100 parties en poids de la somme dudit uréthane insaturé et dudit monomère vinylique:

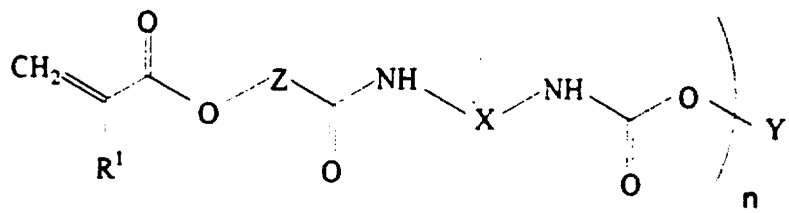

Formule (1)

dans laquelle

$R^1$ est un atome d'hydrogène ou un groupe méthyle; X est un groupe résiduel obtenu en enlevant les groupes isocyanates d'un diisocyanate;
Y est un groupe résiduel obtenu en enlevant les groupes hydroxyles d'un diol ou d'un triol polymérisable par voie non radicalaire, choisi dans le groupe constitué par: les ester diols et les ester triols qui sont des esters partiels pouvant être obtenus à partir d'un acide alcane monocarboxylique ou d'un acide alcène monocarboxylique ayant 5 à 22 atomes de carbone et d'un polyol trihydrique ou tétrahydrique;
les éther diols et les éther triols qui sont partiellement éthérifiés avec un groupe alkyle ou un groupe alcényle ayant 5 à 22 atomes de carbone;
les alcanediols ayant 5 à 22 atomes de carbone ou les polyoxyalkylène alcanediols pouvant être obtenus par addition d'un oxyde d'alkylène ayant 2 à 4 atomes de carbone auxdits alcanediols;
les ester diols et ester triols qui sont des esters partiels ou complets pouvant être obtenus à partir d'un acide hydroxyalcane monocarboxylique ou d'un acide hydroxyalcène monocarboxylique ayant 5 à 22 atomes de carbone et d'un alcool dihydrique ou trihydrique;
les esters pouvant être obtenus à partir de 1 mole d'un acide dicarboxylique $\alpha,\beta$-insaturé substitué par un groupe alkyle ayant 5 à 22 atomes de carbone, et de 2 moles d'un (poly)alkylèneglycol ayant des groupes alkylènes contenant 2 à 4 atomes de carbone;
Z est un groupe organique sous la forme de $(R^2O)_m$ ou de $R^3O$, $R^2$ étant un groupe alkylène ayant 2 à 4 atomes de carbone, $R^3$ étant un groupe alkylène ayant 2 à 12 atomes de carbone, et m étant un entier de 2 à 10; et n est 2 ou 3.

2. Composition polymérisable selon la revendication 1, contenant 100 à 300 parties en poids de ladite charge de poudre inorganique pour 100 parties en poids de la somme dudit uréthane insaturé et dudit monomère vinylique.

3. Composition polymérisable selon la revendication 2, dans laquelle ladite charge de poudre inorganique comprend de l'hydroxyde d'aluminium.

4. Produit durci dans le moule en utilisant la composition polymérisable telle que revendiquée dans la revendication 1.

5. Produit durci dans le moule en utilisant la composition polymérisable telle que revendiquée dans la revendication 2.

6. Produit durci dans le moule en utilisant la composition polymérisable telle que revendiquée dans la revendication 3.

7. Produit durci dans le moule tel que revendiqué dans la revendication 4, qui est renforcé avec des fibres renforçantes.

8. Produit durci dans le moule tel que revendiqué dans la revendication 5, qui est renforcé avec des fibres renforçantes.

**9.** Produit durci dans le moule tel que revendiqué dans la revendication 6, qui est renforcé avec des fibres renforçantes.

**10.** Produit durci dans le moule tel que revendiqué dans la revendication 7, contenant plus de 30% en volume desdites fibres renforçantes.

**11.** Produit durci dans le moule tel que revendiqué dans la revendication 8, contenant plus de 30% en volume desdites fibres renforçantes.

**12.** Produit durci dans le moule tel que revendiqué dans la revendication 9, contenant plus de 30% en volume desdites fibres renforçantes.

**13.** Produit durci dans le moule tel que revendiqué dans la revendication 7, produit par pultrusion.

**14.** Produit durci dans le moule tel que revendiqué dans la revendication 8, produit par pultrusion.

**15.** Produit durci dans le moule tel que revendiqué dans la revendication 9, produit par pultrusion.

**16.** Produit durci dans le moule tel que revendiqué dans la revendication 10, produit par pultrusion.

**17.** Produit durci dans le moule tel que revendiqué dans la revendication 11, produit par pultrusion.

**18.** Produit durci dans le moule tel que revendiqué dans la revendication 12, produit par pultrusion.